(19) Europäisches Patentamt

European Patent Office

Office européen des brevets

(11) **EP 2 597 871 B1**

(12) **EUROPEAN PATENT SPECIFICATION**

(45) Date of publication and mention
of the grant of the patent:
**06.08.2014 Bulletin 2014/32**

(51) Int Cl.:
*H04N 19/18* (2014.01)     *H04N 19/60* (2014.01)
*H04N 19/61* (2014.01)     *H04N 19/136* (2014.01)
*H04N 19/122* (2014.01)     *H04N 19/176* (2014.01)

(21) Application number: **12192812.1**

(22) Date of filing: **15.11.2012**

(54) **Method for coding and reconstructing a pixel block using a causal neigborhood of the block for adjusting the transform function of the block residual**

Verfahren zum Codieren und Rekonstruieren eines Pixelblocks mit Nutzung des kausalen Blockumfelds für die Restblockstransformationfunktionsanpassung

Procédé de codage et de reconstruction d'un bloc de pixels avec l'utilisation d'un voisinage causal du bloc pour l'adaptation de la fonction de transformation pour le bloc résiduel

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2011 FR 1160614**

(43) Date of publication of application:
**29.05.2013 Bulletin 2013/22**

(73) Proprietor: **Thomson Licensing
92130 Issy-les-Moulineaux (FR)**

(72) Inventors:
• **Thoreau, Dominique
35576 Cesson Sévigné (FR)**
• **Martin, Aurélie
75015 Paris (FR)**
• **Francois, Edouard
35890 Bourg des Comptes (FR)**

• **Vieron, Jérôme
75015 Paris (FR)**

(74) Representative: **Lorette, Anne
Technicolor
1, rue Jeanne d'Arc
92443 Issy-les-Moulineaux (FR)**

(56) References cited:
**EP-A2- 0 933 944**

• **AURLIE MARTIN ET AL: "Sparse representations for spatial prediction and texture refinement", JOURNAL OF VISUAL COMMUNICATION AND IMAGE REPRESENTATION, ACADEMIC PRESS, INC, US, vol. 22, no. 8, 18 January 2011 (2011-01-18), pages 712-720, XP028310864, ISSN: 1047-3203, DOI: 10.1016/J.JVCIR.2011.01.003 [retrieved on 2011-01-26]**

**Description**

1. Scope of the invention

The invention relates to the general domain of image coding. More particularly, the invention relates to a method for coding a pixel block and a method for reconstructing such a block. The invention also relates to a device for coding device and a device for decoding such a block.

2. Prior art

It is known in order to code a pixel block to predict this block spatially or temporally with a view to calculating a block of residues representative of the prediction error. The block of residues is then transformed into a block of coefficients that is thus quantized then coded into an F stream. Conventionally, the block of residues is transformed with a transform defined by a set of basis functions.

The basis functions of the transform are generally applied identically irrespective of the position of the block in the picture. Therefore, when the basis functions are not correctly phased with the signal observed in the block of residues, a frequency spread is observed. Assume for example, that the block of residues is composed of a pattern corresponding to one of the basis functions of the transform, i.e. of the same frequency as this basis function. When the signal of the block on which the transform is applied is in phase with the basis function, the transform will generate a unique coefficient whose energy is representative of the signal in question. However, when the signal of the block is not in phase with the basis function, the transform will generate several coefficients. In this case, the quantization that follows the transformation frequently eliminates certain coefficients contrary to the case where the block is in phase. This has the effect of leading to a loss of information. This loss of information is due to the quantization and spreading of the coefficients in the transformed domain. It is thus noted, in the case of an out-of-phase signal, that energy is lost as this energy is distributed over several coefficients but also in accuracy at the phase level, these two disadvantages generating the block effect well known in the domain of picture and video compression.

3. Summary of the invention

The purpose of the invention is to overcome at least one of the disadvantages of the prior art. For this purpose, the invention relates to a method according to the appended claims.

The coding method according to the invention advantageously enables coefficients to be spread in the transformed domain which increases the coding efficiency by reducing the coding cost. Indeed, the method of coding by rephasing the basis functions of the transform advantageously adapts this transform to the signal to code. The transform this rephased is more effective as its capacity to compact the signal, to be specific the residual error, into a reduced number of coefficients increases.

According to another aspect of the invention, the transform being separable, the set of basis functions comprises horizontal basis functions and vertical basis functions. The rephasing step of the horizontal and vertical basis functions comprises the following steps:

a) transform at least one line of residues of the causal neighbourhood of the pixel block with the horizontal basis functions into coefficients,
b) determine the larger amplitude coefficient,
c) identify the horizontal base function corresponding to the determined coefficient,
d) determine a horizontal spatial shift between the horizontal basis function identified and the residue line, and
e) rephase the horizontal basis functions with the horizontal spatial shift determined, and
f) reiterate the steps a) to e) vertically on at least one residue column of the causal neighbourhood of the pixel block to rephase the vertical basis functions with a vertical spatial shift determined in step d).

Advantageously, the residues of the residue line and the residue column are calculated according to a prediction mode identical to the prediction mode used to calculate the block of residues.

According to a particular characteristic, the vertical spatial shift and the horizontal spatial shift are determined by phase correlation, the spatial shifts corresponding to a maximum correlation peak, called main peak.

According to a particularly advantageous embodiment, the coding method comprises between the steps d) and e) a step for determining a horizontal subpixel shift respectively vertical by calculating a barycentre from the main peak and correlation peaks surrounding the main peak. According to this embodiment, the horizontal basis functions are rephased with a shift equal to the sum of the horizontal spatial shift and the horizontal subpixel shift and the vertical basis functions are rephased with a shift equal to the sum of the vertical spatial shift and the vertical subpixel shift.

The invention also relates to a method for reconstructing a block of pixels

According to another aspect of the invention, the transform being separable, the set of basis functions comprises horizontal basis functions and vertical basis functions. The rephasing step of the horizontal and vertical basis functions comprises the following steps:

a) transform at least one line of residues of the causal neighbourhood of the pixel block with the horizontal basis functions into coefficients,

b) determine the larger amplitude coefficient,

c) identify the horizontal base function corresponding to the determined coefficient,

d) determine a horizontal spatial shift between the horizontal basis function identified and the residue line, and

e) rephase the horizontal basis functions with the horizontal spatial shift determined, and

f) reiterate the steps a) to e) vertically on at least one residue column of the causal neighbourhood of the pixel block to rephase the vertical basis functions with a vertical spatial shift determined in step d).

Advantageously, the residues of the residue line and the residue column are calculated according to a prediction mode identical to the prediction mode used to calculate the block of residues.

According to a particular characteristic of the invention, the vertical spatial shift and the horizontal spatial shift are determined by phase correlation, the spatial shifts corresponding to a maximum correlation peak, called main peak.

According to another embodiment, the reconstruction method comprises between the steps d) and e) a step for determining a horizontal subpixel shift respectively vertical by calculating a barycentre from the main peak and correlation peaks surrounding the main peak. According to this embodiment, the horizontal basis functions are rephased with a shift equal to the sum of the horizontal spatial shift and the horizontal subpixel shift and the vertical basis functions are rephased with a shift equal to the sum of the vertical spatial shift and the vertical subpixel shift.

The invention also relates to a pixel block coding device according to the appended claims.

The invention further relates to a decoding device of a stream representative of a pixel block according to the appended claims.

The rephasing of the basis functions being carried out symmetrically by the coding and reconstruction method no additional information needs to be coded into the stream. Notably the spatial shifts do not have to be transmitted.

## 4. List of figures

The invention will be better understood and illustrated by means of non-restrictive embodiments and advantageous implementations, with reference to the accompanying drawings, wherein:

- figure 1 shows a method for coding of a pixel block $b_{cur}$ according to the invention,
- figure 2 shows the pixel block $b_{cur}$ and a causal neighbourhood of this block $b_{cur}$,
- figure 3 shows a detail of the coding method shown in figure 1,
- figure 4 shows functions Z and S in a transformed domain,
- figure 5 shows correlation functions in a transformed domain and in a spatial domain,
- figure 6 shows a method for reconstructing a pixel block according to the invention,
- figure 7 shows a coding device according to the invention, and
- figure 8 shows a decoding device according to the invention.

## 5. Detailed description of the invention

The invention relates to a method for reconstructing a block of pixels of a sequence of images and a method for coding such a block. A picture sequence is a series of several pictures. Each picture comprises pixels or picture points with each of which at least one item of picture data is associated. An item of image data is for example an item of luminance data or an item of chrominance data. Hereafter, the coding and reconstruction methods are described with reference to a pixel block. It is clear that these methods can be applied on several blocks of an image and on several images of a sequence with a view to the coding respectively the reconstruction of one or more images.

The term "motion data" is to be understood in the widest sense. It designates the motion vectors and possibly the reference image indexes enabling a reference image to be identified in the image sequence. It can also comprise an item of information indicating the interpolation type used to determine the prediction block. In fact, in the case where the motion vector associated with a block Bc does not have integer coordinates, it is necessary to interpolate the image data in the reference image Ir to determine the prediction block. The motion data associated with a block are generally calculated by a motion estimation method, for example by block matching. However, the invention is in no way limited by the method enabling a motion vector to be associated with a block.

The term "residual data" or "residual error" signifies data obtained after extraction of other data. The extraction is generally a subtraction pixel by pixel of prediction data from source data. However, the extraction is more general and notably comprises a weighted subtraction in order for example to account for an illumination variation model. The term "residual data" is synonymous with the term "residue". A residual block is a block of pixels with which residual data is associated.

The term "transformed residual data" designates residual data to which a transform has been applied. A DCT ("Discrete Cosine Transform") is an example of such a transform described in chapter 3.4.2.2 of the book by I. E. Richardson called "H.264 and MPEG-4 video compression" published by J. Wiley & Sons in September 2003. The wavelet transform described in chapter 3.4.2.3 of the book by I. E. Richardson and the Hadamard transform are other examples. Such transforms "transform" a block of image data, for example residual luminance and/or chrominance data, into a "block of transformed data" also called a "transformed block", "block of frequency data" or a "block of coefficients". The block of coefficients generally comprises a low frequency coefficient known under the name of continuous coefficient or DC coefficient and high frequency coefficients known as AC coefficients. The term "image domain" or "spatial domain" designates the domain of pixels with which luminance and/or chrominance values are associated. The "frequency domain" or "transformed domain" represents the domain of coefficients. One changes from the spatial domain to the transformed domain by applying to the image a transform, for example a DCT and conversely from the transformed domain to the spatial domain by applying a reverse transform of the preceding one, for example an inverse DCT.

The "prediction data" term designates data used to predict other data. A prediction block is a block of pixels with which prediction data is associated. A prediction block is obtained from a block or several blocks of the same image as the image to which belongs the block that it predicts (spatial prediction or intra-image prediction) or from one (mono-directional prediction) or several reference blocks (bi-directional prediction or bi-predicted) of a different image (temporal prediction or inter-image prediction) of the image to which the block that it predicts belongs.

The term "prediction mode" designates the way in which the block is predicted. Among the prediction modes, there is the INTRA mode that corresponds to a spatial prediction and the INTER mode that corresponds to a temporal prediction. The prediction mode possibly specifies the way in which the block is partitioned to be coded. Thus, the 8x8 INTER prediction mode associated with a block of size 16x16 signifies that the 16x16 block is partitioned into 4 8x8 blocks and predicted by temporal prediction.

The term "reconstructed data" designates data (e.g. pixels, blocks) obtained after merging residues with prediction data. The merging is generally a sum of prediction data with residues. However, the merging is more general and notably comprises a weighted sum in order for example to account for an illumination variation model. A reconstructed block is a block of reconstructed pixels.

In reference to the decoding of images, the terms "reconstruction" and "decoding" are very often used as synonyms. Hence, a "reconstructed block" is also designated under the terminology "decoded block".

The term coding is to be taken in the widest sense. The coding can possibly comprise the transformation and/or the quantization of image data. It can also designate only the entropy coding.

A "causal neighbourhood" of a current block designates a neighbourhood of this block that comprises pixels coded/reconstructed before the current block.

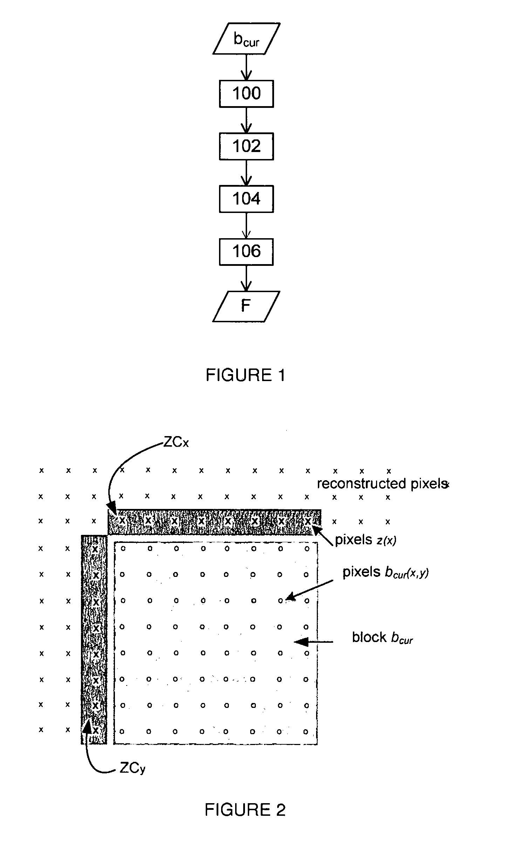

In reference to **figure 1,** the invention relates to a method for coding a pixel block $b_{cur}$ of size NxN with N an integer of the type comprising a transformation step with a transform T defined by a set of basis functions. During a step 100, a block of residues b is calculated from the pixel block $b_{cur}$ and a prediction block bp determined according to a prediction mode. For example, $b(i,j)=b_{cur}(i,j)-bp(i,j)$ where (i,j) are the coordinates of a pixel.

During a step 102, the basis functions of the transform T are rephased from a causal neighbourhood of the block $b_{cur}$. An example of such a neighbourhood is represented in **figure 2** by the zones ZCx and ZCy. More precisely, the basis functions are rephased from residues calculated in this causal neighbourhood.

During a step 104, the block of residues b is transformed into a block of coefficients B with the rephased basis functions. The block of coefficients B is determined in the following manner: $B = T_{phase}(b)$, where $T_{phase}$ is the transform defined by the rephased basis functions.

During a step 106, the block of coefficients B is coded in a stream F. For example, the block of coefficients B is possibly quantized then coded by entropy coding of the type VLC (Variable Length Coding), CAVLC (Context-Adaptive Variable Length Coding) or even CABAC (Context-Adaptive Binary Arithmetic Coding). These techniques are well known to those skilled in the art of image coding and are not further described. The invention is in no way limited by the type of entropy coding used.

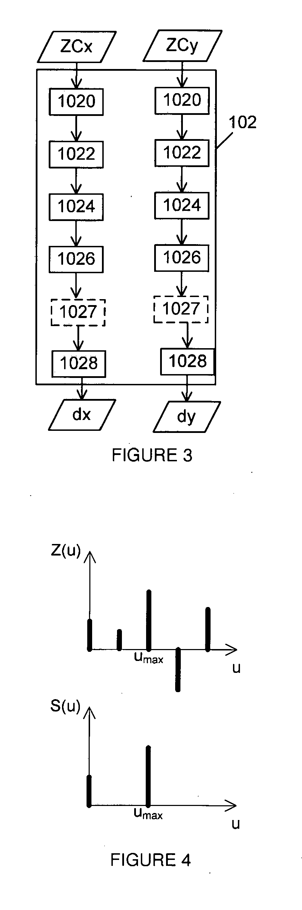

This particular embodiment is described with reference to **figure 3** for a separable transform. In this case, the set of basis functions is separated into vertical basis functions Cy and horizontal basis functions Cx. This embodiment is described in the particular case of the DCT transform but the invention is in no way limited by this transform. The embodiment described in relation to figure 3 applies to any separable transform.

In the particular case of the DCT, the base functions are defined as follows:

$$C_x = \left[c_x(i,j)\right]_{N \times N} \text{ and } \qquad c_x(i,j) = \alpha(i)\cos\left(\frac{(2j+1)}{2N}.i.\pi\right)$$

$$C_y = \left[c_y(i,j)\right]_{N \times N} \text{ and } c_y(i,j) = \alpha(j)\cos\left(\frac{(2i+1)}{2N}.j.\pi\right)$$

and

$$\alpha(i) = \begin{cases} \sqrt{1/N} & i = 0 \\ \sqrt{2/N} & i \neq 0 \end{cases}$$

The block b is transformed into a block B of coefficients in the following manner:

$$B = \left[B(u,v)\right]_{N \times N} = C_x.b.C_y$$

where (u,v) are the coordonates of a coefficient in the frequency domain.
According to this embodiment, the step 102 for rephasing basis functions comprises the following steps for:

- rephasing the horizontal basis functions, and
- rephasing the vertical basis functions.

The step for rephasing the horizontal basis functions is described in relation to the left-hand part of figure 3.
During a step 1020, residues $z(x)$ calculated in the causal neighbourhood ZCx of the block $b_{cur}$ are transformed with the horizontal basis functions into $Z(u)$ coefficients represented in **figure 4.** According to a particular embodiment, ZCx comprises the line of pixels located just above the current block $b_{cur}$ as shown in figure 2. Each pixel of ZCx is associated with a residue value $z(x)$. ZCx is therefore a residue line. According to a variant, ZCx comprises several lines of residue pixels located above the current block $b_{cur}$. The residues $z(x)$ are for example calculated by extending to the neighbourhood ZCx the residual error calculated for the current block. Hence, the values $z(x)$ are obtained by using the prediction mode Mode associated with the current block $b_{cur}$ and possibly the motion data MV used to calculate the block of residues b. More precisely, Mode and possibly MV are used to calculate prediction data $z_p(x)$ for the pixels of the neighbourhood ZCx, prediction data $z_p(x)$ from which the residues $z(x)$ are calculated. For example, $z(x) = z_{cur}(x) - z_p(x)$, where $z_{cur}(x)$ is the luminance or chrominance image data.

During a step 1022, the coefficient $Z(u_{max})$ of larger amplitude is determined: $u_{max} = \underset{U}{\arg\max}\{Z\}$ with $u \neq 0$.

During a step 1024, the horizontal basis functions corresponding to the determined coefficient is identified. For this purpose, one returns to the spatial domain by applying to the intermediate function S(u), defined as follows and represented on figure 4, the inverse transform of the one applied in the step 1020:

- S(u) = Z(u) if u = 0
- S(U) = Z(U) if U = Umax
- Else S(u)=0.

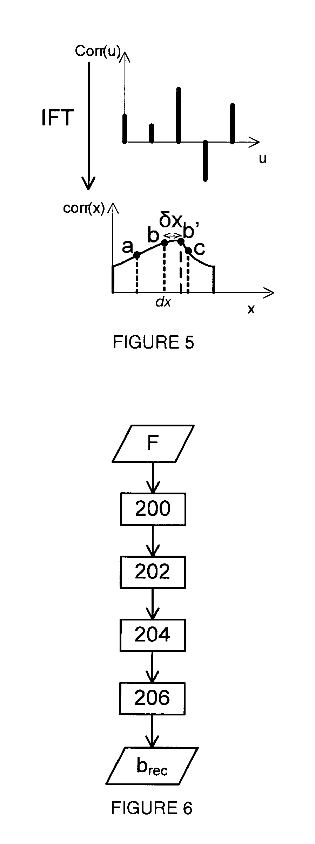

According to an embodiment, it is further verified if $Z(u_{max}) > TH$, TH is a threshold value. For example, TH is a multiple of a quantization step QP used during the coding of the coefficients. The rephasing of the basis functions is thus only carried out if $Z(u_{max}) > TH$.
The inverse transform of S(u) is noted s(x). s(x) corresponds to one of the basis functions of the transform T that is thus identified from s(x).
During a step 1026, a horizontal spatial shift dx between the horizontal basis function identified and the residue line ZCx is determined. According to a simple illustrative example, the horizontal spatial shift dx is determined by phase correlation as illustrated in **figure 5**. For this purpose, the residue line z(x) is transformed by a Fourier transform into a transformed signal FZ(u). Likewise, s(x) is transformed by the Fourier transform into a transformed signal FS(u). The correlation is thus calculated according to the following formula:

$$Corr(u) = \frac{FS(u).FZ^*(u)}{\left| FS(u).FZ^*(u) \right|}$$

with $FZ^*(u)$ the conjugate complex of $FZ(u)$

The correlation in the transformed domain is brought to the spatial domain by applying to Corr(u) an inverse Fourier transform IFT. The correlation in the spatial domain is noted corr(x): corr(x)=IFT(Corr(u)).

The shift or phase dx is obtained by determining the correlation peak in the spatial domain: $dx = \arg\max_{x} \{corr(x)\}$

According to an embodiment variation, the horizontal spatial shift dx is determined by spatial correlation. More precisely, for each shift dx in finite set E of possible shifts, the spatial correlation is calculated between the basis function identified rephased with dx and the residue line ZCx. The shift dx chosen is the one for which the spatial correlation is the greatest. For example, E={1,2,3,4}. According to a variant, E={1, 1.5, 2, 2.5, 3, 3.5, 4} which enables a subpixel shift to be determined. Naturally, E can include more precise shifts for example at the ¼ pixel, at the 1/8 pixel, etc.

During a step 1028, the horizontal basis functions are rephased with the horizontal spatial shift dx determined at the step 1026. In the case of the DCT, Cx is rephased as follows:

$$c_x(i,j) = \alpha(i)\cos\left(\frac{\left(2(j+dx)+1\right)}{2N}.i.\pi\right)$$

Likewise, the 1020 to 1028 are applied vertically on the zone ZCy as illustrated in the right-hand part of figure 3. The basic vertical functions are rephased with the vertical spatial shift determined at the step 1026. In the case of the DCT, Cy is rephased as follows:

$$c_y(i,j) = \alpha(j)\cos\left(\frac{\left(2(i+dy)+1\right)}{2N}.j.\pi\right)$$

According to an advantageous embodiment, the shifts dx and dy determined during the step 1026 are refined during a step 1027. For example, the barycentre of the energy surrounding the correlation peak in the spatial domain is determined on the basis of three energy peaks identified by the letters a, b and c centred on the main peak b as illustrated in figure 5. The barycentre noted b' can determine a horizontal subpixel shift noted δx and a vertical subpixel shift noted δy. According to this embodiment, the horizontal and vertical basis functions are shifted respectively by (dx+ δx) and (dy+ δy) at the step 1028. According to another variant, a known analytic function curve, e.g. a parabola, that passes through the three energy peaks centred on the main peak is determined. The maximum of this function corresponds to the shift (dx+ δx) or (dy+ δy) according to whether work is done on the horizontal or vertical.

With reference to **figure 6,** the invention relates to a method for reconstructing a pixel block $b_{cur}$ of size NxN with N an integer of the type comprising a transformation step with a transform T' defined by a set of basis functions.

During a step 200, a block of coefficients B representative of the block $b_{rec}$ to reconstruct is decoded from a stream F. For example, the block of coefficients B is possibly decoded by entropy decoding of the type VLC (Variable Length Coding), CAVLC (Context-Adaptive Variable Length Coding) or even CABAC (Context-Adaptive Binary Arithmetic Coding) and possibly dequantized. This step is the reverse of the step 106 of the coding method.

During a step 202, the basis functions of the transform T' are rephased from a causal neighbourhood of the block to reconstruct. An example of such a neighbourhood is represented in figure 2 by the zones ZCx and ZCy. More precisely, the basis functions are rephased from residues calculated in this causal neighbourhood.

During a step 204, the block of coefficients B is transformed into a block of residues B with the rephased basis functions. The block of residues is determined in the following manner:

$$b = T'_{phase}(B) \, ,$$

where $T'_{phase}$ is the transform defined by the rephased basis functions.

During a step 206, a pixel block $b_{rec}$ is reconstructed from the block of residues b and a prediction block bp determined according to a prediction mode. For example, $b(i,j)=b_{rec}(i,j)-b_p(i,j)$ where (i,j) are the coordinates of a pixel.

The particular embodiments described with reference to figures 3, 4 and 5 for the coding method apply identically to the reconstruction method and more particularly to the step 202 for rephasing basis functions. The block of coefficients B is transformed during the step 204 into a block of residues according to the following formula: $b = C_y.B.C_x$ where $C_x$ and $C_y$ are the rephased horizontal and vertical basis functions of dx and dy, possibly of (dx+ $\delta$x) and (dy+ $\delta$y).

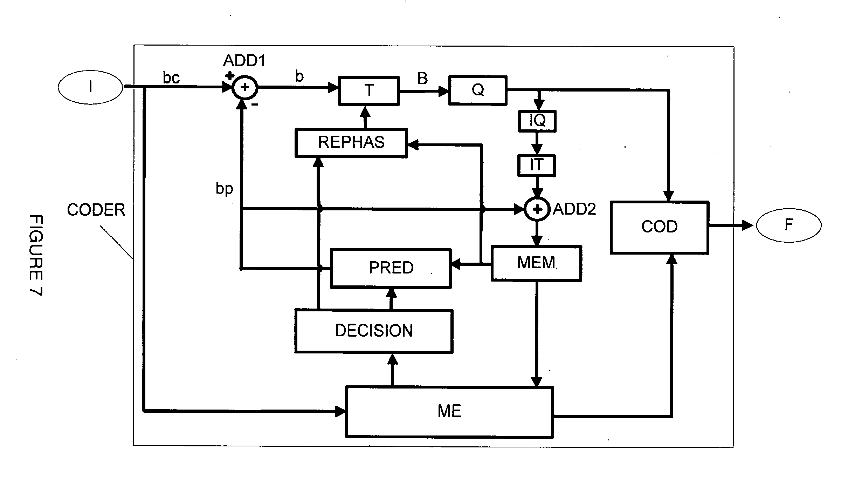

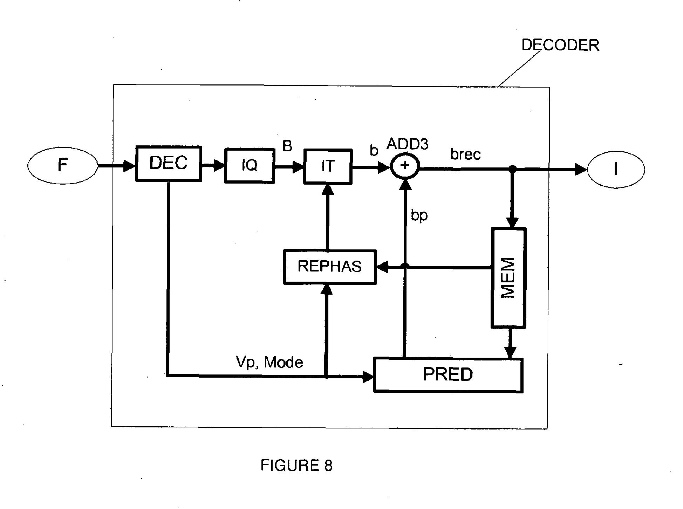

With reference to **figures 7 and 8**, the invention relates to a coding device CODER of a pixel block and a decoding device DECODER of a stream F representative of such a pixel block. In these figures, the modules shown are functional units that may or may not correspond to physically distinguishable units. For example, these modules or some of them can be grouped together in a single component, or constitute functions of the same software. On the contrary, some modules may be composed of separate physical entities.

With reference to figure 7, the coding device CODER receives as input images I belonging to a sequence of images. Each image is divided into pixel blocks $b_{cur}$ with each of which at least one item of image data is associated, e.g. luminance and/or chrominance. The coding device CODER notably implements a coding with temporal prediction. Only the modules of the coding device CODER relating to coding by temporal prediction or INTER coding are represented in figure 6. Other modules not represented and known to those skilled in the art of video coders implement the INTRA coding with or without spatial prediction. The coding device CODER notably comprises a calculation module ADD1 able to extract according to the step 100 of the coding method, for example by subtraction pixel by pixel, from the current block $b_{cur}$ a prediction block bp to generate a block of residues b. It further comprises a transformation module T able to transform with a transform T defined by a set of basis functions the block of residues b into a block of coefficients B. The transform T is for example a DCT. The coding device CODER further comprises a rephasing module REPHAS able to rephase the basis functions of the transform T according to the step 102 of the coding procedure described with reference to figure 1. The transformation module T thus applies, according to the step 104 of the coding method, on the block b a set of rephased basis functions. The output of the transformation module T is connected to the input of a quantization module Q able to quantize the block of coefficients B into quantized data. The output of the quantization module is connected to the input of the entropy coding module COD able to code the quantized data into a stream F of coded data. The step 106 of the coding method is thus implemented by the Q and COD modules. It further comprises a module IQ performing the inverse operation of the quantization module Q connected to a module IT performing the inverse operation of the transformation module T. The output of the module IT is connected to a calculation module ADD2 capable of adding pixel by pixel the block of data from the module IT and the prediction block bp to generate a reconstructed block that is stored in a memory MEM.

The coding device CODER also comprises a motion estimation module ME able to estimate at least one motion vector Vp between the block $b_{cur}$ and a reference image Ir stored in the memory MEM, this image having previously been coded then reconstructed. According to one variant, the motion estimation can be made between the current block bc and the source image corresponding to Ir, in which case the memory MEM is not connected to the motion estimation module ME. According to a method well known to those skilled in the art, the motion estimation module searches in the reference image Ir, respectively in the corresponding source image, for a motion vector so as to minimise an error calculated between the current block $b_{cur}$ and a block in the reference image Ir, respectively in the corresponding source image, identified using said motion vector. According to one variant, the motion vector is determined by phase correlation or overall motion estimation or even by "template matching". The motion data is transmitted by the motion estimation module ME to a decision module DECISION able to select a coding mode for the block $b_{cur}$ in a predefined set of coding modes. The chosen coding mode is for example the one that minimizes a bitrate-distortion type criterion. However, the invention is not restricted to this selection method and the mode chosen can be selected according to another criterion for example an a priori type criterion. The coding mode selected by the decision module DECISION as well as the motion data, for example the motion vector or vectors in the case of the temporal prediction mode or INTER mode are transmitted to a prediction module PRED. The motion vector or vectors and the selected coding mode are moreover transmitted to the entropy coding module COD to be coded in the stream F. If a prediction mode INTER is retained by the decision module DECISION the prediction module PRED then determines in the reference image Ir previously reconstructed and stored in the memory MEM, the prediction block bp from the motion vector determined by the motion estimation module ME. If a prediction mode INTRA is retained by the decision module DECISION, the prediction module PRED determines in the current image, among the blocks previously coded and stored in the memory MEM, the prediction block bp.

With reference to figure 8, the decoding device DECODER receives at input a stream F of coded data representative of a sequence of images or a part of such a sequence such as a block. The stream F is for example transmitted by a coding device CODER. The decoding device DECODER comprises an entropy decoding module DEC able to generate decoded data, for example coding modes and decoded data relating to the content of the images. The decoding device DECODER further comprises a motion data reconstruction module. According to a first embodiment, the motion data reconstruction module is the entropic decoding module DEC that decodes a part of the stream F representative of motion vectors.

According to a variant not shown in figure 8, the motion data reconstruction module is a motion estimation module. This solution for reconstructing motion data by the decoding device DECOD is known as "template matching".

The decoded data relating to the content of the images is then sent to an inverse quantization module IQ able to perform an inverse quantization of the decoded data to obtain a block of coefficients B. The step 200 of the reconstruction method is implemented in the modules DEC and IQ. The module IQ is connected to a transformation IT module able to perform an inverse transformation to the one performed by the module T of the coding device CODER. The modules IQ and IT are identical to the modules IQ respectively IT of the coding device CODER having generated the coded stream F. The decoding device DECODER further comprises a rephasing module REPHAS able to rephase the basis functions of the transform IT according to the step 202 of the reconstruction method described with reference to figure 6. The transformation module IT thus applies, according to the step 204 of the reconstruction method, on the block of coefficients B a set of rephased basis functions. The module IT is connected to a calculation module ADD3 able to merge, for example by pixel to pixel addition, the block of residues b from the module IT and a prediction block bp to generate a reconstructed block $b_{rec}$ that is stored in a memory MEM. The decoding device DECODER also comprises a prediction module PRED identical to the prediction module PRED of the coding device CODER. If a prediction mode INTER is decoded, the prediction module PRED determines in a reference image Ir previously reconstructed and stored in the memory MEM, the prediction block $b_{cur}$ by the entropy decoding module DEC. If a prediction mode INTRA is decoded, the prediction module PRED determines in the current image among the blocks previously reconstructed and stored in the memory MEM, the prediction block bp.

Obviously, the invention is not limited to the embodiments mentioned above.

In particular, those skilled in the art may apply any variant to the stated embodiments and combine them to benefit from their various advantages. Particularly, the rephasing of basis functions from the causal neighbourhood is applicable to any type of transform irrespective of the size and the dimension 1D, 2D, etc. Likewise, the shape of the causal neighbourhood according to the invention can vary.

**Claims**

1.  Video coding method for coding a pixel block comprising the following steps:

    - calculating (100), a block of residues from said pixel block and from a prediction block determined according to a prediction mode.
    - transforming (104) said block of residues into a block of coefficients with a transform defined by a set of basis functions, and
    - coding (106) said block of coefficients,
    the method being **characterized in that** it comprises, before the transformation step (104), a step (102) for rephasing said basis functions from residues calculated according to said prediction mode in a causal neighbourhood of said pixel block and **in that** the transformation step uses the rephased basis functions.

2.  Coding method according to claim 1, wherein, said transform being separable, said set of basis functions comprises horizontal basis functions and vertical basis functions and wherein the step (102) for rephasing said basis functions comprises the following steps for:

    - rephasing the horizontal basis functions, and
    - rephasing the vertical basis functions.

3.  Coding method according to claim 2, wherein rephasing the horizontal basis functions comprises:

    a) transforming (1020) at least one line of residues of the causal neighbourhood of said pixel block with the horizontal basis functions into coefficients,
    b) determining (1022) the larger amplitude coefficient,
    c) identifying the (1024) horizontal base function corresponding to said determined coefficient,
    d) determining a (1026) horizontal spatial shift between the horizontal basis function identified and said residue line, and

e) rephasing (1028) the horizontal basis functions with said horizontal spatial shift determined, and wherein rephasing the vertical basis functions comprises the steps a) to e) reiterated vertically on at least one residue column of the causal neighbourhood of said pixel block to rephase the vertical basis functions with a vertical spatial shift determined in step d).

4. Coding method according to claim 3, wherein the residues of said residue line and of said residue column are calculated according to a prediction mode identical to said prediction mode used to calculate said block of residues.

5. Coding method according to claim 3 or 4, wherein the vertical spatial shift and the horizontal spatial shift are determined (1026) by phase correlation, said spatial shifts corresponding to a maximum correlation peak, called main peak.

6. Coding method according to claim 5, which comprises between the steps d) and e) a step (1027) of determining a horizontal respectively vertical subpixel shift by calculating a barycentre from said main peak and correlation peaks surrounding said main peak and wherein said horizontal basis functions are rephased (1028) with a shift equal to the sum of said horizontal spatial shift and of said horizontal subpixel shift and said vertical basis functions are rephased (1028) with a shift equal to the sum of said vertical spatial shift and said vertical subpixel shift.

7. Video decoding method comprising the following steps:

- decoding (200) a block of coefficients and a prediction mode,
- transforming (204) said block of coefficients into a block of residues with a transform defined by a set of basis functions, and
- reconstructing (206) a pixel block from said block of residues and from a prediction block determined according to said prediction mode,
the method being **characterized in that** it comprises, before the transformation step, a step (202) for rephasing said basis functions from residues calculated according to said prediction mode in a causal neighbourhood of said pixel block and **in that** the transformation step uses the rephased basis functions.

8. Decoding method according to claim 7, wherein, said transform being separable, said set of basis functions comprises horizontal basis functions and vertical basis functions and wherein the step (102) for rephasing said basis functions comprises the following steps for:

- rephasing the horizontal basis functions, and
- rephasing the vertical basis functions.

9. Decoding method according to claim 8, wherein rephasing the horizontal basis functions comprises:

a) transforming (1020) at least one line of residues of the causal neighbourhood of said pixel block with the horizontal basis functions into coefficients,
b) determining (1022) the larger amplitude coefficient,
c) identifying the (1024) horizontal base function corresponding to said determined coefficient,
d) determining a (1026) horizontal spatial shift between the horizontal basis function identified and said residue line, and
e) rephasing (1028) the horizontal basis functions with said horizontal spatial shift determined, and wherein rephasing the vertical basis functions comprises the steps a) to e) reiterated vertically on at least one residue column of the causal neighbourhood of said pixel block to rephase the vertical basis functions with a vertical spatial shift determined in step d).

10. Decoding method according to claim 9, wherein the residues of said residue line and of said residue column are calculated according to a prediction mode identical to said prediction mode used to calculate said block of residues.

11. Decoding method according to claim 9 or 10, wherein the vertical spatial shift and the horizontal spatial shift are determined (1026) by phase correlation, said spatial shifts corresponding to a maximum correlation peak, called main peak.

12. Decoding method according to claim 11, which comprises between the steps d) and e) a step (1027) of determining a horizontal respectively vertical subpixel shift by calculating a barycentre from said main peak and correlation peaks surrounding said main peak and wherein said horizontal basis functions are rephased (1028) with a shift equal to the sum of said horizontal spatial shift and of said horizontal subpixel shift
and said vertical basis functions are rephased (1028) with a shift equal to the sum of said vertical spatial shift and said vertical subpixel shift.

13. Video coding device (CODER) for coding a pixel block comprising:

- means (ADD1) for calculating a block of residues from said pixel block and from a prediction block determined according to a prediction mode,
- means (T) for transforming said block of residues into a block of coefficients with a transform defined by a set of basis functions, and
- means (Q, COD) for coding said block of coefficients,
the coding device being **characterized in that** it further comprises means (REPHAS) for rephasing said basis functions from residues calculated according to said prediction mode in a causal neighbourhood of said pixel block and **in that** said means (T) for transforming uses the rephased basis functions.

14. Coding device according to claim 13, the coding device being adapted to execute the steps of the coding method according to one of claims 1 to 6.

15. Video decoding device (DECODER) comprising:

- means (DEC, IQ) for decoding a block of coefficients and a prediction mode ;
- means (IT) for transforming said block of coefficients into a block of residues with a transform defined by a set of basis functions, and
- means (ADD3) for reconstructing said pixel block from said block of residues and from a prediction block determined according to a prediction mode,
the decoding device being **characterized in that** it further comprises means (REPHAS) for rephasing said basis functions from residues calculated according to said prediction mode in a causal neighbourhood of said pixel block and **in that** said means (T) for transforming uses the rephased basis functions.

16. Decoding device according to claim 15, the decoding device being adapted to execute the steps of the method for decoding according to one of claims 7 to 12.

**Patentansprüche**

1. Videocodierungsverfahren zum Codieren eines Pixelblocks, wobei das Verfahren die folgenden Schritte umfasst:

- Berechnen (100) eines Blocks von Resten von dem Pixelblock und von einem in Übereinstimmung mit einer Prädiktionsbetriebsart bestimmten Prädiktionsblock,
- Transformieren (104) des Blocks von Resten in einen Block von Koeffizienten mit einer durch einen Satz von Basisfunktionen definierten Transformation, und
- Codieren (106) des Blocks von Koeffizienten,

wobei das Verfahren **dadurch gekennzeichnet ist, dass** es vor dem Transformationsschritt (104) einen Schritt (102) zum Rephasieren der Basisfunktionen von in Übereinstimmung mit der Prädiktionsbetriebsart in einer kausalen Nachbarschaft des Pixelblocks berechneten Resten umfasst und dass der Transformationsschritt die rephasierten Basisfunktionen verwendet.

2. Codierungsverfahren nach Anspruch 1, wobei die Transformation separabel ist, wobei der Satz von Basisfunktionen horizontale Basisfunktionen und vertikale Basisfunktionen umfasst und wobei der Schritt (102) zum Rephasieren der Basisfunktionen die folgenden Schritte umfasst:

- Rephasieren der horizontalen Basisfunktionen, und
- Rephasieren der vertikalen Basisfunktionen.

3. Codierungsverfahren nach Anspruch 2, wobei das Rephasieren der horizontalen Basisfunktionen umfasst:

a) Transformieren (1020) mindestens einer Zeile von Resten der kausalen Nachbarschaft des Pixelblocks mit den horizontalen Basisfunktionen in Koeffizienten,
b) Bestimmen (1022) des größeren Amplitudenkoeffizienten,
c) Identifizieren (1024) der horizontalen Basisfunktion entsprechend dem bestimmten Koeffizienten,
d) Bestimmen (1026) einer horizontalen räumlichen Verschiebung zwischen der identifizierten horizontalen Basisfunktion und der Restzeile, und
e) Rephasieren (1028) der horizontalen Basisfunktionen mit der bestimmten horizontalen räumlichen Verschiebung, und

wobei das Rephasieren der vertikalen Basisfunktionen die Schritte a) bis e) umfasst, die an mindestens einer Restspalte der kausalen Nachbarschaft des Pixelblocks vertikal wiederholt werden, um die vertikalen Basisfunktionen mit einer in Schritt d) bestimmten vertikalen räumlichen Verschiebung zu rephasieren.

4. Codierungsverfahren nach Anspruch 3, wobei die Reste der Restzeile und der Restspalte in Übereinstimmung mit einer Prädiktionsbetriebsart berechnet werden, die gleich der zum Berechnen des Blocks von Resten verwendeten Prädiktionsbetriebsart ist.

5. Codierungsverfahren nach Anspruch 3 oder 4, wobei die vertikale räumliche Verschiebung und die horizontale räumliche Verschiebung durch Phasenkorrelation bestimmt werden (1026), wobei die räumlichen Verschiebungen einer maximalen Korrelationsspitze, Hauptspitze genannt, entsprechen.

6. Codierungsverfahren nach Anspruch 5, das zwischen den Schritten d) und e) einen Schritt (1027) zum Bestimmen einer horizontalen bzw. vertikalen Subpixelverschiebung durch Berechnen eines Schwerpunkts von der Hauptspitze und von den Korrelationsspitzen, die die Hauptspitze umgeben, umfasst und wobei die horizontalen Basisfunktionen mit einer Verschiebung gleich der Summe der horizontalen räumlichen Verschiebung und der horizontalen Subpixelverschiebung rephasiert werden (1028) und wobei die vertikalen Basisfunktionen mit einer Verschiebung gleich der Summe der vertikalen räumlichen Verschiebung und der vertikalen Subpixelverschiebung rephasiert werden (1028).

7. Videodecodierungsverfahren, das die folgenden Schritte umfasst:

- Decodieren (200) eines Blocks von Koeffizienten und einer Prädiktionsbetriebsart,
- Transformieren (204) des Blocks von Koeffizienten in einen Block von Resten mit einer durch einen Satz von Basisfunktionen definierten Transformation, und
- Rekonstruieren (206) eines Pixelblocks von dem Block von Resten und von einem in Übereinstimmung mit der Prädiktionsbetriebsart bestimmten Prädiktionsblock, wobei das Verfahren **dadurch gekennzeichnet ist, dass** es vor dem Transformationsschritt einen Schritt (202) zum Rephasieren der Basisfunktionen von in Übereinstimmung mit der Prädiktionsbetriebsart in einer kausalen Nachbarschaft des Pixelblocks berechneten Resten umfasst und dass der Transformationsschritt die rephasierten Basisfunktionen verwendet.

8. Decodierungsverfahren nach Anspruch 7, wobei die Transformation separabel ist, wobei der Satz von Basisfunktionen horizontale Basisfunktionen und vertikale Basisfunktionen umfasst und wobei der Schritt (102) zum Rephasieren der Basisfunktionen die folgenden Schritte umfasst:

- Rephasieren der horizontalen Basisfunktionen, und
- Rephasieren der vertikalen Basisfunktionen.

9. Decodierungsverfahren nach Anspruch 8, wobei das Rephasieren der horizontalen Basisfunktionen umfasst:

a) Transformieren (1020) mindestens einer Zeile von Resten der kausalen Nachbarschaft des Pixelblocks mit den horizontalen Basisfunktionen in Koeffizienten,
b) Bestimmen (1022) des größeren Amplitudenkoeffizienten,
c) Identifizieren (1024) der horizontalen Basisfunktion, die dem bestimmten Koeffizienten entspricht,
d) Bestimmen (1026) einer horizontalen räumlichen Verschiebung zwischen der identifizierten horizontalen Basisfunktion und der Restzeile, und
e) Rephasieren (1028) der horizontalen Basisfunktionen mit der bestimmten horizontalen räumlichen Verschiebung, und

wobei das Rephasieren der vertikalen Basisfunktionen die Schritte a) bis e) umfasst, die an mindestens einer Restspalte der kausalen Nachbarschaft des Pixelblocks vertikal wiederholt werden, um die vertikalen Basisfunktionen mit einer in Schritt d) bestimmten vertikalen räumlichen Verschiebung zu rephasieren.

**10.** Decodierungsverfahren nach Anspruch 9, wobei die Reste der Restzeile und der Restspalte in Übereinstimmung mit einer Prädiktionsbetriebsart berechnet werden, die gleich der zum Berechnen des Blocks von Resten verwendeten Prädiktionsbetriebsart ist.

**11.** Decodierungsverfahren nach Anspruch 9 oder 10, wobei die vertikale räumliche Verschiebung und die horizontale räumliche Verschiebung durch Phasenkorrelation bestimmt werden (1026), wobei die räumlichen Verschiebungen einer maximalen Korrelationsspitze, Hauptspitze genannt, entsprechen.

**12.** Decodierungsverfahren nach Anspruch 11, das zwischen den Schritten d) und e) einen Schritt (1027) zum Bestimmen einer horizontalen bzw. vertikalen Subpixelverschiebung durch Berechnen eines Schwerpunkts von der Hauptspitze und von den Korrelationsspitzen, die die Hauptspitze umgeben, umfasst und wobei die horizontalen Basisfunktionen mit einer Verschiebung gleich der Summe der horizontalen räumlichen Verschiebung und der horizontalen Subpixelverschiebung rephasiert werden (1028),

und wobei die vertikalen Basisfunktionen mit einer Verschiebung gleich der Summe der vertikalen räumlichen Verschiebung und der vertikalen Subpixelverschiebung rephasiert werden (1028).

**13.** Videocodierungsvorrichtung (CODER) zum Codieren eines Pixelblocks, wobei die Vorrichtung umfasst:

- ein Mittel (ADD1) zum Berechnen eines Blocks von Resten von dem Pixelblock und von einem in Übereinstimmung mit einer Prädiktionsbetriebsart bestimmten Prädiktionsblock,
- ein Mittel (T) zum Transformieren des Blocks von Resten in einen Block von Koeffizienten mit einer durch einen Satz von Basisfunktionen definierten Transformation, und
- ein Mittel (Q, COD) zum Codieren des Blocks von Koeffizienten,

wobei die Codierungsvorrichtung **dadurch gekennzeichnet ist, dass** sie ferner ein Mittel (REPHAS) zum Rephasieren der Basisfunktionen von in Übereinstimmung mit der Prädiktionsbetriebsart in einer kausalen Nachbarschaft des Pixelblocks berechneten Resten umfasst und dass das Mittel (T) zum Transformieren die rephasierten Basisfunktionen verwendet.

**14.** Codierungsvorrichtung nach Anspruch 13, wobei die Codierungsvorrichtung dafür ausgelegt ist, die Schritte des Codierungsverfahrens nach einem der Ansprüche 1 bis 6 auszuführen.

**15.** Videodecodierungsvorrichtung (DECODER), die umfasst:

- ein Mittel (DEC, IQ) zum Decodieren eines Blocks von Koeffizienten und einer Prädiktionsbetriebsart;
- ein Mittel (IT) zum Transformieren des Blocks von Koeffizienten in einen Block von Resten mit einer durch einen Satz von Basisfunktionen definierten Transformation, und
- ein Mittel (ADD3) zum Rekonstruieren des Pixelblocks von dem Block von Resten und von einem in Übereinstimmung mit einer Prädiktionsbetriebsart bestimmten Prädiktionsblock,

wobei die Decodierungsvorrichtung **dadurch gekennzeichnet ist, dass** sie ferner ein Mittel (REPHAS) zum Rephasieren der Basisfunktionen von in Übereinstimmung mit der Prädiktionsbetriebsart in einer kausalen Nachbarschaft des Pixelblocks berechneten Resten umfasst und dass das Mittel (T) zum Transformieren die rephasierten Basisfunktionen verwendet.

**16.** Decodierungsvorrichtung nach Anspruch 15, wobei die Decodierungsvorrichtung dafür ausgelegt ist, die Schritte des Verfahrens zum Decodieren nach einem der Ansprüche 7 bis 12 auszuführen.

**Revendications**

**1.** Procédé de codage vidéo pour coder un bloc de pixels comprenant les étapes suivantes :

- calcul (100) d'un bloc de résidus à partir dudit bloc de pixels et à partir d'un bloc de prédiction déterminé selon un mode de prédiction.
- transformation (160) dudit bloc de résidus en un bloc de coefficients à l'aide d'une transformée définie par un ensemble de fonctions de base, et
- codage (106) dudit bloc de coefficients,

le procédé étant **caractérisé en ce qu'**il comprend, avant l'étape de transformation (104), une étape (102) pour remettre en phase lesdites fonctions de base à partir des résidus calculés selon ledit mode de prédiction dans un voisinage causal dudit bloc de pixels et **en ce que** l'étape de transformation utilise les fonctions de base remises en phase.

2. Procédé de codage selon la revendication 1, dans lequel, ladite transformée étant séparable, ledit ensemble de fonctions de base comprend des fonctions de base horizontales et des fonctions de base verticales et dans lequel l'étape (102) pour la remise en phase desdites fonctions de base comprend les étapes suivantes pour :

- remettre en phase les fonctions de base horizontales, et
- remettre en phase les fonctions de base verticales.

3. Procédé de codage selon la revendication 2, dans lequel la remise en phase des fonctions de base horizontales comprend :

a) la transformation (1020) d'au moins une ligne de résidus dudit voisinage causal dudit bloc de pixels à l'aide des fonctions de base horizontales en coefficients,
b) la détermination (1022) du coefficient d'amplitude le plus important,
c) l'identification (1024) de la fonction de base horizontale correspondant audit coefficient déterminé,
d) la détermination (1026) d'un décalage spatial horizontal entre la fonction de base horizontale identifiée et ladite ligne de résidus, et
e) la remise en phase (1028) des fonctions de base horizontales avec ledit décalage spatial horizontal déterminé, et

dans lequel, la remise en phase des fonctions de base verticales comprend les étapes a) à e) réitérées verticalement sur au moins une colonne de résidus du voisinage causal dudit bloc de pixels pour remettre en phase les fonctions de base verticales avec un décalage spatial vertical déterminé dans l'étape d).

4. Procédé de codage selon la revendication 3, dans lequel les résidus de ladite ligne de résidus et de ladite colonne de résidus sont calculés selon un mode de prédiction identique audit mode de prédiction utilisé pour calculer ledit bloc de résidus.

5. Procédé de codage selon la revendication 3 ou 4, dans lequel le décalage spatial vertical et le décalage spatial horizontal sont déterminés (1026) par corrélation de phase, lesdits décalages spatiaux correspondant à un pic de corrélation maximum, nommé pic principal.

6. Procédé de codage selon la revendication 5, qui comprend entre les étapes d) et e), une étape (1027) de détermination d'un décalage horizontal de sous-pixels respectivement vertical en calculant un barycentre à partir dudit pic principal et des pics de corrélation entourant ledit pic principal et dans lequel lesdites fonctions de base horizontales sont remises en phase (1028) avec un décalage égal à la somme dudit décalage spatial horizontal et dudit décalage horizontal de sous-pixels et lesdites fonctions de base verticales sont remises en phase (1028) avec un décalage égal à la somme dudit décalage spatial vertical et dudit décalage vertical de sous-pixels.

7. Procédé de décodage vertical comprenant les étapes suivantes :

- décodage (200) d'un bloc de coefficients et d'un mode de prédiction,
- transformation (204) dudit bloc de coefficients en un bloc de résidus à l'aide d'une transformée définie par un ensemble de fonctions de base, et
- reconstruction (206) d'un bloc de pixels à partir dudit bloc de résidus et à partir d'un bloc de prédiction déterminé selon ledit mode de prédiction,

le procédé étant **caractérisé en ce qu'**il comprend, avant l'étape de transformation, une étape (202) pour remettre en phase lesdites fonctions de base à partir des résidus calculés selon ledit mode de prédiction dans un voisinage causal dudit bloc de pixels et **en ce que** l'étape de transformation utilise les fonctions de base remises en phase.

8. Procédé de décodage selon la revendication 7, dans lequel, ladite transformée étant séparable, ledit ensemble de fonctions de base comprend des fonctions de base horizontales et des fonctions de base verticales et dans lequel l'étape (102) pour la remise en phase desdites fonctions de base comprend les étapes suivantes pour :

   - remettre en phase les fonctions de base horizontales, et
   - remettre en phase les fonctions de base verticales.

9. Procédé de décodage selon la revendication 8, dans lequel la remise en phase des fonctions de base horizontales comprend :

   a) la transformation (1020) d'au moins une ligne de résidus dudit voisinage causal dudit bloc de pixels à l'aide des fonctions de base horizontales en coefficients,
   b) la détermination (1022) du coefficient d'amplitude le plus important,
   c) l'identification (1024) de la fonction de base horizontale correspondant audit coefficient déterminé,
   d) la détermination (1026) d'un décalage spatial horizontal entre la fonction de base horizontale identifiée et ladite ligne de résidus, et
   e) la remise en phase (1028) des fonctions de base horizontales avec ledit décalage spatial horizontal déterminé, et

   dans lequel, la remise en phase des fonctions de base verticales comprend les étapes a) à e) réitérées verticalement sur au moins une colonne de résidus du voisinage causal dudit bloc de pixels pour remettre en phase les fonctions de base verticales avec un décalage spatial vertical déterminé dans l'étape d).

10. Procédé de décodage selon la revendication 9 dans lequel les résidus de ladite ligne de résidus et de ladite colonne de résidus sont calculés selon un mode de prédiction identique audit mode de prédiction utilisé pour calculer ledit bloc de résidus.

11. Procédé de décodage selon la revendication 9 ou 10, dans lequel le décalage spatial vertical et le décalage spatial horizontal sont déterminés (1026) par corrélation de phase, lesdits décalages spatiaux correspondant à un pic de corrélation maximum, nommé pic principal.

12. Procédé de décodage selon la revendication 11, qui comprend entre les étapes d) et e), une étape (1027) de détermination d'un décalage horizontal de sous-pixels respectivement vertical en calculant un barycentre à partir dudit pic principal et des pics de corrélation entourant ledit pic principal et dans lequel lesdites fonctions de base horizontales sont remises en phase (1028) avec un décalage égal à la somme dudit décalage spatial horizontal et dudit décalage vertical de sous-pixels
et lesdites fonctions de base verticales sont remises en phase (1028) avec un décalage égal à la somme dudit décalage spatial vertical et dudit décalage vertical de sous-pixels.

13. Dispositif de codage vidéo (CODER) pour coder un bloc de pixels comprenant :

   - un moyen (ADD1) de calcul pour le calcul d'un bloc de résidus à partir dudit bloc de pixels et à partir d'un bloc de prédiction déterminé selon un mode de prédiction.
   - un moyen (T) pour la transformation dudit bloc de résidus en un bloc de coefficients à l'aide d'une transformée définie par un ensemble de fonctions de base, et
   - un moyen (Q, COD) pour le codage dudit bloc de coefficients,

   le dispositif de codage étant **caractérisé en ce qu'**il comprend en outre un moyen (REPHAS) de remise en phase desdites fonctions de base à partir des résidus calculés selon ledit mode de prédiction dans un voisinage causal dudit bloc de pixels et **en ce que** ledit moyen (T) de transformation utilise les fonctions de base.

14. Dispositif de codage selon la revendication 13, le dispositif de codage étant adapté pour l'exécution des étapes du procédé de codage selon l'une des revendications 1 à 6.

15. Dispositif de décodage vidéo (DECODER) comprenant

- un moyen (DEC, IQ) de décodage d'un bloc de coefficients et d'un mode de prédiction ;
- un moyen (IT) de transformation dudit bloc de coefficients en un bloc de résidus à l'aide d'une transformée définie par un ensemble de fonctions de base, et
- un moyen (ADD3) de reconstruction dudit bloc de pixels à partir dudit bloc de résidus et à partir d'un bloc de prédiction déterminé selon un mode de prédiction,

le dispositif de décodage étant **caractérisé en ce qu'**il comprend en outre un moyen (REPHAS) de remise en phase desdites fonctions de base à partir des résidus calculés selon ledit mode de prédiction dans un voisinage causal dudit bloc de pixels et **en ce que** ledit moyen (T) de transformation utilise les fonctions de base remises en phase.

16. Dispositif de décodage selon la revendication 15, le dispositif de décodage étant adapté pour l'exécution des étapes du procédé de décodage selon l'une des revendications 7 à 12.

FIGURE 1

FIGURE 2

FIGURE 3

FIGURE 4

FIGURE 5

FIGURE 6

FIGURE 7

FIGURE 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. E. RICHARDSON.** H.264 and MPEG-4 video compression. J. Wiley & Sons, September 2003